# EUROPEAN PATENT SPECIFICATION

(11) **EP 2 641 885 B1**
(45) Date of publication and mention of the grant of the patent: **30.05.2018**
(21) Application number: 11842016.5
(22) Date of filing: 17.11.2011
(51) Int. Cl.: C04B 24/12, C04B 24/22, C04B 28/02, C08G 10/02, C04B 103/32

(54) **HYDRAULIC COMPOSITION DISPERSING AGENT**
DISPERGIERMITTEL FÜR EINE HYDRAULIKZUSAMMENSETZUNG
AGENT DE DISPERSION POUR COMPOSITION HYDRAULIQUE

(30) Priority: 19.11.2010 JP 2010258865
(43) Date of publication of application: 25.09.2013
(73) Proprietor: Kao Corporation, Chuo-Ku Tokyo 103-8210 (JP)
(72) Inventor: SAGAWA Keiichiro, Wakayama-shi Wakayama 640-8580 (JP); SHIMODA Masaaki, Wakayama-shi Wakayama 640-8580 (JP); NAGASAWA Koji, Wakayama-shi Wakayama 640-8580 (JP); HAMAI Toshimasa, Wakayama-shi Wakayama 640-8580 (JP)
(74) Representative: Hoffmann Eitle
(86) International application number: PCT/JP2011/076482
(87) International publication number: WO 2012/067173

(56) References cited:
- DE-A1- 3 112 179
- DE-A1- 19 926 611
- JP-A- H07 109 158
- JP-A- 2000 511 151
- JP-A- 2002 145 651
- JP-A- 2007 031 166

## Description

### Field of the invention

The present invention relates to a dispersant for hydraulic composition.

### Background of the invention

Dispersants for hydraulic composition are chemical admixtures, and used for dispersing cement particles, thereby reducing a unit water quantity necessary for achieving a required slump and enhancing workability and the like of a hydraulic composition. There are conventionally known dispersants, including naphthalene dispersants such as a naphthalenesulfonic acid-formaldehyde condensate, polycarboxylic acid dispersants such as a copolymer of a carboxylic acid and a monomer having an alkyleneglycol chain, and melamine dispersants such as melaminesulfonic acid-formaldehyde condensate.

The naphthalene dispersant, in one hand, generally has better properties than polycarboxylic acid and melamine dispersants, as exhibiting a smaller variation in effect for imparting flowability in response to differences such as of material and temperature, providing a hydraulic composition having a relatively low viscosity, and being easier to use in preparation of a hydraulic composition. On the other hand, the naphthalene dispersant tends to provide a hydraulic composition being inferior in flowability retention and strength of a 24-hour or 7-day hardened article to polycarboxylic acid dispersants. Although use of a set retarder such as gluconic acid together with the naphthalene dispersant can improve flowability retention of a hydraulic composition, the set retarder delays the initiation of hardening and the hydraulic composition has a decreased 24-hour hardening strength.

Use of an amine compound is one of known techniques to increase strength of a 24-hour or 7-day hardened article of a hydraulic composition. For example, JP-A 2007-31166 discloses a method of adding an acidic liquid set accelerator containing aluminum, sulfur, and an alkanolamine, powdery aluminum sulfate, and one or more inorganic compounds selected from the group containing sulfates, aluminates and hydroxides to a cement concrete in order to provide a spray material having a low alkali content and exhibiting good initial strength development. In Examples of this patent, diethanolamine and a naphthalenesulfonic acid-based water-reducing agent are used as the alkanolamine and a dispersant for cement, respectively.

JP-B 2000-511151 (WO-A 97/019032) discloses a multifunctional hydraulic cement composition admixture containing a set accelerator, which is an alkali or alkaline earth metal salt of organic or inorganic acid, and a fatty acid aminosulfonic acid surfactant in order to provide a multifunctional admixture having properties of accelerating setting of a hydraulic composition and air entraining. This patent also discloses a composition admixture further containing a water-reducing agent containing an alkali or alkaline earth metal salt of lignosulfonic acid, polycarboxylic acid, naphthalenesulfonic acid condensate, melaminesulfonic acid condensate, hydroxylated carboxylic acid, or a hydrocarbon, and a composition admixture further containing an early strength enhancer containing an alkanolamine.

This patent describes preferred examples of the admixture including triethanolamine or triisopropanolamine as the alkanolamine and calcium lignosulfate as the water-reducing agent.

JP-A 2002-145651 describes a hydraulic composition produced from waste-derived materials such as incinerated ash of municipal solid waste or sewage sludge, and a cement composition containing the hydraulic composition and a strength enhancer such as an alkanolamine. JP-B 2011-515323 describes a belite-calcium sulfoaluminate-ferrite (BCSAF) cement composition containing a BCSAF clinker and an alkanolamine.

DE 3112179 (A1) discloses an additive for cement comprising a granular molded product formed of a water-reducing agent composed mainly of a naphtalenesulfonic acid/formaldehyde high condensate (NSF) or salt thereof, and a carrier. As the cation forming a salt with NSF, sodium, potassium, calcium, ammonium, monoethanolamine, diethanolamine and triethanolamine are mentioned.

JP H07 109158 (A) concerns a cement dispersant composed mainly of a specific formaldehyde co-condensate having a weight average molecular weight of 3,000-100,000. The formaldehyde co-condensate is therefore compounded with 5-95wt.% of a concrete dispersant, such as a co-condensate of naphthalene sulfonic acid salt with formaldehyde to form the cement dispersant.

DE 19926611 (A1) discloses copolymers on the basis of unsaturated monocarboxylic or dicarboxylic acid derivatives, oxyalkylene glycol alkenyl ethers, vinylic polyalkylene glycol, polysiloxane or ester compounds and the use thereof as additives for aqueous suspensions based on mineral or bituminous binders. The copolymers are described to provide aqueous solutions with excellent processing properties without delaying their strength properties.

### Summary of the Invention

The present invention relates to a dispersant for a hydraulic composition, containing an alkyldiethanolamine having an alkyl group having 1 to 3 carbon atoms and a naphthalenesulfonic acid-formaldehyde condensate, wherein a weight ratio of the alkyldiethanolamine having an alkyl group having 1 to 3 carbon atoms to the naphthalenesulfonic acid-formaldehyde condensate (alkyldiethanolamine/ naphthalenesulfonic acid-formaldehyde condensate) is 0.01 to 2.0.

The present invention relates to an aqueous solution of a dispersant for a hydraulic composition, containing the dispersant for a hydraulic composition according to claim 1 or 2 and water, wherein, in the aqueous solution, the content of the alkyldiethanolamine having an alkyl group having 1 to 3 carbon atoms is 0.1 to 30% by weight and the content of the condensate naphthalenesulfonic acid-formaldehyde is 0.3 to 50% by weight.

The present invention relates to a hydraulic composition, containing an alkyldiethanolamine having an alkyl group having 1 to 3 carbon atoms, a naphthalenesulfonic acid-formaldehyde condensate, a hydraulic powder, an aggregate and water, wherein the hydraulic powder contains SO₃ in an amount of 0.5 to 6.0% by weight, and a weight ratio of the alkyldiethanolamine having an alkyl group having 1 to 3 carbon atoms to the naphthalenesulfonic acid-formaldehyde condensate (alkyldiethanolamine/ naphthalenesulfonic acid-formaldehyde condensate) is 0.01 to 2.0.

The present invention relates to use of an alkyldiethanolamine having an alkyl group having 1 to 3 carbon atoms and a naphthalenesulfonic acid-formaldehyde condensate for adding them to a hydraulic composition at a weight ratio of the alkyldiethanolamine having an alkyl group having 1 to 3 carbon atoms to the naphthalenesulfonic acid-formaldehyde condensate (alkyldiethanolamine/ naphthalenesulfonic acid-formaldehyde condensate) of 0.01 to 2.0 for improving flowability retention of the hydraulic composition.

The present invention relates to a method for improving flowability retention of a hydraulic composition, including adding an alkyldiethanolamine having an alkyl group having 1 to 3 carbon atoms and a naphthalenesulfonic acid-formaldehyde condensate to the hydraulic composition at a weight ratio of the alkyldiethanolamine having an alkyl group having 1 to 3 carbon atoms to the naphthalenesulfonic acid-formaldehyde condensate (alkyldiethanolamine/naphthalenesulfonic acid-formaldehyde condensate) of 0.01 to 2.0.

### Detailed description of the invention

Use of diethanolamine or triisopropanolamine as an amine compound for enhancing early strength in combination with a naphthalene dispersant, as described in Examples in JP-A 2007-31166 and compositional examples in JP-B 2000-511151, has been found to decrease flowability retention of a hydraulic composition from that of a hydraulic composition prepared using only a naphthalene dispersant. Neither JP-A2002-145651 nor JP-B 2011-515323 describes reduction in flowability retention of a hydraulic composition.

The present invention provides a dispersant for hydraulic composition enhancing both flowability retention and an early hardening strength of a hydraulic composition, containing a naphthalenesulfonic acid-formaldehyde condensate as a dispersing agent.

The present inventors have found that a combination of a naphthalenesulfonic acid-formaldehyde condensate and a specified alkyldiethanolamine at a specified weight ratio enhances flowability retention of a hydraulic composition more than use of only a naphthalene dispersant.

A mechanism of a combination of a naphthalenesulfonic acid-formaldehyde condensate and a specific alkyldiethanolamine at a specific weight ratio enhancing flowability retention is unknown, but assumed as follows.

Amine compounds such as triethanolamine are known to enhance hardening strength of a hydraulic composition. This may be due to actions of these compounds to promote hydration of minerals in a hydraulic powder to accelerate crystal growth, thereby enhance the hardening strength. Acceleration in crystal growth makes the hydraulic powder cure quickly. The hydraulic composition accordingly exhibits a reduced flowability just after 15 minutes from kneading. However, the specific alkyldiethanolamine according to the present invention may contribute to compaction of a crystal formed by hydration of minerals in the hydraulic powder and enhance hardening strength of the hydraulic composition regardless of a setting rate of the hydraulic powder at the early stage. In addition, the specific alkyldiethanolamine may chelate a calcium ion in the hydraulic composition to cause a relative increase of sulfate ions in the hydraulic composition, thereby adequately controlling an adsorption rate of a naphthalenesulfonic acid-formaldehyde condensate on the hydraulic powder, resulting in enhanced flowability retention.

According to the present invention, a dispersant for hydraulic composition enhancing both flowability retention and an early hardening strength of a hydraulic composition, containing a naphthalenesulfonic acid-formaldehyde condensate.

### <Alkyldiethanolamine>

Examples of the alkyldiethanolamine having an alkyl group having 1 to 3 carbon atoms, or an N-alkyldiethanolamine having an alkyl group having 1 to 3 carbon atoms according to the present invention include N-methyldiethanolamine, N-ethyldiethanolamine, and N-n-propyldiethanolamine. Use of a combination of the alkyldiethanolamine and a naphthalenesulfonic acid-formaldehyde condensate at a specific weight ratio can enhance flowability retention of a hydraulic composition, while enhancing a 24-hour and a 7-day hardening strengths of the hydraulic composition. Alkyldiethanolamines having 4 or more carbon atoms tend to be less effective for enhancing hardening strength of a hydraulic composition. From the viewpoint of enhancement in flowability retention and hardening strength of a hydraulic composition, preferred are N-methyldiethanolamine and N-ethyldiethanolamine, and more preferred is N-methyldiethanolamine.

The alkyldiethanolamine according to the present invention may be a commercial product. For increasing solubility in water, the alkyldiethanolamine may be used in the form of a salt. Examples of the salt include a sulfate, an acetate, a lactate, a chloride, a formate, a carbonate, a silicate, and mixtures thereof. With increasing solubility in water, the alkyldiethanolamine becomes easy to handle. When the alkyldiethanolamine according to the present invention is used in the form of a salt, the hereinafter references to weight such as contents does not mean a weight of the alkyldiethanolamine salt itself, but a calculated value as amine.

### <Naphthalenesulfonic acid-formaldehyde condensate>

From the viewpoint of enhancement in flowability of a hydraulic composition, the naphthalenesulfonic acid-formaldehyde condensate according to the present invention preferably has a weight average molecular weight of not more than 200,000, more preferably not more than 100,000, even more preferably not more than 80,000, still even more preferably not more than 50,000, and yet still even more preferably not more than 20,000. From the same viewpoint, the weight average molecular weight is also preferably not less than 1,000, more preferably not less than 3,000, even more preferably not less than 4,000, and still even more preferably not less than 5,000. Collecting them together, the weight average molecular weight is preferably 1,000 to 200,000, more preferably 3,000 to 100,000, even more preferably 4,000 to 80,000, still even more preferably 5,000 to 50,000, and yet still even more preferably 5,000 to 20,000. The naphthalenesulfonic acid-formaldehyde condensate may be used in an acid form or a neutralized form.

For example, the naphthalenesulfonic acid-formaldehyde condensate is produced by condensing naphthalenesulfonic acid and formaldehyde. The produced condensate may be neutralized. Water-insoluble by-products generated through the neutralization may be removed. The specific process is as follows. For producing naphthalenesulfonic acid, 1 mole of naphthalene is reacted with 1.2 to 1.4 moles of sulfuric acid for 2 to 5 hours at 150 to 165°C to obtain a sulfonated product. The resultant sulfonated product is condensed with formaldehyde by adding formalin dropwise in such amount as corresponding to 0.95 to 0.99 moles of formaldehyde per mole of the sulfonated product for 3 to 6 hours at 85 to 95°C and, after the adding dropwise, reacting at 95 to 105°C. The resultant aqueous solution of a condensed product is highly acidic, and can be subjected to a neutralization step of adding water and a neutralizer at 80 to 95°C in order to prevent corrosion of metal of a storage tank or the like. The neutralizer is preferably added in each amount of the 1.0 to 1.1 times molar to naphthalenesulfonic acid and unreacted sulfuric acid. Water-insoluble by-products generated through the neutralization is removed, preferably by filtration. Through these steps, produced is an aqueous solution of a water-soluble salt of a naphthalenesulfonic acid-formaldehyde condensate. The aqueous solution can be used as a dispersant solution by itself or combined with the alkyldiethanolamine to be used as an aqueous solution of the dispersant of the present invention. A concentration of the naphthalenesulfonic acid-formaldehyde condensate in the aqueous solution, which may be varied according to an application, from the viewpoint of balance between performance of dispersing a hydraulic powder and ease of handling depending on a viscosity of the aqueous solution, is preferably 0.3 to 50% by weight, more preferably 5 to 45% by weight, and even more preferably 30 to 45% by weight. The aqueous solution may be dried and ground to obtain powder of the naphthalenesulfonic acid-formaldehyde condensate salt, if needed. The powder can be used as a dispersant powder by itself or combined with the alkyldiethanolamine to be used as the dispersant of the present invention. Drying and grinding can be conducted by spray drying, drum drying, or freeze-drying, or the like.

### <Dispersant for hydraulic composition>

The dispersant for hydraulic composition of the present invention contains an alkyldiethanolamine having an alkyl group having 1 to 3 carbon atoms and a naphthalenesulfonic acid-formaldehyde condensate. A weight ratio of the alkyldiethanolamine [hereinafter, also referred to as component (A)] to the naphthalenesulfonic acid-formaldehyde condensate [hereinafter, also referred to as component (B)], component (A) /component (B), is 0.01 to 2.0, more preferably 0.02 to 1.5, more preferably 0.03 to 1.2, more preferably 0. 03 to 0.5, more preferably 0. 03 to 0.3, more preferably 0.08 to 0.3, and even more preferably 0.15 to 0.3. From the viewpoint of enhancement in flowability retention of a hydraulic composition, the weight ratio is preferably within this range. From the viewpoint of 24 -hour hardening strength of a hydraulic composition, the weight ratio, component (A)/component (B), is preferably 0. 02 to 1.5, more preferably 0. 03 to 1.2, and even more preferably 0.20 to 1.2.

The dispersant for hydraulic composition of the present invention may be used in a solid form such as a powder or granule, or in a liquid or paste form dissolved or dispersed in a solvent. Among these forms, preferred is a liquid form as a uniform solution, and more preferred is an aqueous solution form, because the aqueous solution is a uniform liquid having a controlled viscosity. The dispersant in the form of uniform aqueous solution having a low viscosity can be used as a one-part formulation, which is easy to handle. In cases of using the dispersant in the form of aqueous solution, the aqueous solution contains the component (A) in an amount of 0.1 to 30% by weight, preferably 0.5 to 30% by weight, more preferably 0.8 to 25% by weight, and even more preferably 0.8 to 10% by weight. The aqueous solution contains the component (B) in an amount of 0.3 to 50% by weight, preferably 3 to 45% by weight, more preferably 6 to 45% by weight, and even more preferably 7 to 40% by weight. In cases of the aqueous solution, a content of water is preferably 20 to 99.6% by weight, more preferably 25 to 96.5% by weight, more preferably 30 to 93.2% by weight, more preferably 40 to 93.2% by weight, more preferably 50 to 92.2% by weight, and even more preferably 60 to 90% by weight. The total content of components (A) and (B) is preferably 0.4 to 80% by weight, more preferably 3.5 to 75% by weight, even more preferably 6.8 to 70% by weight, still even more preferably 7.8 to 50% by weight, and yet still even more preferably 10 to 40% by weight. In cases of using the dispersant in a liquid form, a solvent used may be water or an organic solvent.

The dispersant for hydraulic composition may further contain other chemical agent such as a dispersing agent, air entraining agent (AE agent), a defoaming agent, a thickening agent, an early strengthening agent, a set retarding agent, and the like, in addition to the components (A) and (B), if needed.

### <Hydraulic composition>

The hydraulic composition of the present invention contains an alkyldiethanolamine having an alkyl group having 1 to 3 carbon atoms [component (A)], a naphthalenesulfonic acid-formaldehyde condensate [component (B)], a hydraulic powder, an aggregate, and water. A weight ratio of the water to the hydraulic powder [weight ratio of the water to the hydraulic powder in the hydraulic composition, usually represented as W/P, and also as W/C when the powder is a cement] is preferably 0.20 to 0.50. From the viewpoints of initial flowability and hardening strength of a hydraulic composition, the weight ratio is more preferably 0.25 to 0.48, and even more preferably 0.30 to 0.46. The alkyldiethanolamine having an alkyl group having 1 to 3 carbon atoms and the naphthalenesulfonic acid-formaldehyde condensate in the dispersant which are the same as in the above description can be used.

Addition of components (A) and (B) according to the present invention to a composition containing a hydraulic powder, an aggregate, and water can enhance flowability retention of the composition, resulting in a hydraulic composition having a small degradation with time of dispersion and being easy to handle. The components (A) and (B) maybe added by mixing themselves with each other in advance and then adding them to a composition containing a hydraulic powder, an aggregate, and water. They may be alternatively added separately from each other. They may be added as a dispersant containing them.

The hydraulic powder used in the hydraulic composition of the present invention is a powder having properties for hardening through hydration, including cements and gypsums. Preferably used are cements such as normal portland cement, belite cement, moderate heat portland cement, early strength portland cement, ultra early strength portland cement, sulfate resisting portland cement, and masonry cement. These cements may be blended with blast furnace slag, fly ash, silica fume, stone powder (calcium carbonate powder), and the like.

The alkyldiethanolamine according to the present invention is presumed to act on SO₃ and aluminate phases (C₃A and C₄A), which are minerals, in a hydraulic powder. Therefore, for enhancing a 24-hour hardening strength of the hydraulic composition of the present invention, the hydraulic powder used in the hydraulic composition preferably contains SO₃ in an amount of 0.5 to 6.0% by weight, more preferably 0.8 to 4.5% by weight, and even more preferably 1.0 to 4.0% by weight. From the same viewpoint, a ratio of an amount of SO₃ in the hydraulic powder to the total amount of C₃A and C₄AF in the hydraulic powder is, as represented by SO₃/ (total of C₃A and C₄AF) × 100, preferably 3.5 to 46, more preferably 6.0 to 35, and even more preferably 8.0 to 32. The value represents a ratio of an amount of SO₃ to the total amount of aluminate phases in the hydraulic powder.

From the viewpoint of flowability retention of the hydraulic composition of the present invention, the hydraulic powder used in the hydraulic composition preferably contains SO₃ in an amount of 0.5 to 4.5% by weight, and more preferably 2.0 to 3.8% by weight. From the same viewpoint, a ratio of an amount of SO₃ in the hydraulic powder to the total amount of C₃A and C₄AF in the hydraulic powder is, as represented by (SO₃)/ (total of C₃A and C₄AF) × 100, preferably 3.5 to 35, and more preferably 15 to 28. The ratio represents a ratio of an amount of SO₃ to the total amount of aluminate phases in the hydraulic powder.

The hydraulic composition of the present invention contains an aggregate. Examples of the aggregate include fine aggregates such as sand and coarse aggregates such as gravel. A hydraulic composition is prepared by adding sand or sand and gravel as an aggregate or aggregates to a hydraulic powder. A final product thereof is generally called as mortar or concrete. The hydraulic composition of the present invention is useful for concrete products used in any fields, including mortar, ready-mixed concrete, and vibration-proof concrete, and also self-leveling concrete, fire-proof concrete, plaster, gypsum slurry, light-weight and heavy-weight concretes, AE agent, concrete for repair, prepacked concrete, tremie, grout, concrete for ground improving, and cold weather concrete.

In the hydraulic composition of the present invention, the total amount of components (A) and (B) is preferably 0.001 to 10 parts by weight, more preferably 0.01 to 5.0 parts by weight, even more preferably 0.05 to 2.0 parts by weight, still even more preferably 0.2 to 1.0 parts by weight, and yet still even more preferably 0.3 to 0.6 parts by weight to 100 parts by weight of hydraulic powder. For enhancing a 24-hour hardening strength, an amount of the component (A) is preferably 0.0005 to 4.5 parts by weight, more preferably 0.005 to 2.25 parts by weight, more preferably 0.008 to 1.0 parts by weight, more preferably 0.015 to 0.8, more preferably 0. 03 to 0.5, and even more preferably 0.05 to 0.3 to 100 parts by weight of hydraulic powder. From the viewpoint of flowability retention of the hydraulic composition, the amount is preferably 0.005 to 1.0 parts by weight, more preferably 0.015 to 0.5 parts by weight, even more preferably 0. 03 to 0.2 parts by weight, and still even more preferably 0.08 to 0.15 to 100 parts by weight of hydraulic powder. From the viewpoint of flowability of the hydraulic composition, an amount of the component (B) is preferably 0.005 to 9 parts by weight, more preferably 0.05 to 4.5 parts by weight, even more preferably 0.1 to 3 parts by weight, and still even more preferably 0.3 to 0.5 parts by weight to 100 parts by weight of hydraulic powder.

In the hydraulic composition of the present invention, for enhancing flowability retention of the hydraulic composition, a weight ratio of components (A) to (B), component (A) /component (B), is 0.01 to 2.0, preferably 0. 02 to 1.5, more preferably 0. 03 to 1.5, more preferably 0. 03 to 1.2, more preferably 0. 03 to 0.5, more preferably 0.03 to 0.3, more preferably 0.08 to 0.3, and even more preferably 0.15 to 0.3. For enhancing flowability retention of the hydraulic composition, the weight ratio is preferably within the range. From the viewpoint of a 24-hour hardening strength, the weight ratio is preferably 0.02 to 1.5, more preferably 0. 03 to 1.2, and even more preferably 0.20 to 1.2.

In the hydraulic composition of the present invention, a content of aggregates (the total amount of fine and coarse aggregates) is preferably 1600 to 2000 kg, and more preferably 1650 to 1950 kg per cubic meter of the hydraulic composition. A content of the hydraulic powder is preferably 250 to 800 kg, and more preferably 280 to 700 kg per cubic meter of the hydraulic composition. A content of water is preferably 100 to 200 kg and more preferably 110 to 195 kg per cubic meter of the hydraulic composition.

In cases of the hydraulic composition of the present invention containing a fine aggregate only as the aggregate, an amount of the fine aggregate is preferably 100 to 350 parts by weight, more preferably 100 to 300 parts by weight, and even more preferably 150 to 300 parts by weight to 100 parts by weight of hydraulic powder.

The hydraulic composition of the present invention can be used as a material for concrete structures and concrete products. The hydraulic composition of the present invention has an increased 24-hour and 7-day compressive strength after contacting with water, and even when blended with a hydraulic powder having low hardening strength at an early age after contacting with water (for example, blast furnace slag, fly ash, or limestone), can have an equivalent 24-hour and 7-day compressive strength after contacting with water to, or higher than, a hydraulic composition without the component (A) and/or the component (B).

The hydraulic composition of the present invention has a better flowability retention than a hydraulic composition prepared only from a naphthalenesulfonic acid-formaldehyde condensate, while retaining an easy handling with use of the naphthalenesulfonic acid-formaldehyde condensate. Therefore it can release a limitation to time for casting into a frame. Further, the hydraulic composition of the present invention provides a hardened article having an increased 24-hour and 7-day compressive strength after contacting with water.

The aspects of the present invention will be described below:
<1> a dispersant for hydraulic composition, containing an alkyldiethanolamine having an alkyl group having 1 to 3 carbon atoms and a naphthalenesulfonic acid-formaldehyde condensate, wherein a weight ratio of the alkyldiethanolamine having an alkyl group having 1 to 3 carbon atoms to the naphthalenesulfonic acid-formaldehyde condensate (alkyldiethanolamine/naphthalenesulfonic acid-formaldehyde condensate) is 0.01 to 2.0.
<2> the dispersant for hydraulic composition according to <1>, wherein the alkyldiethanolamine having an alkyl group having 1 to 3 carbon atoms is a compound selected from N-methyldiethanolamine and N-ethyldiethanolamine.
<3> the dispersant for hydraulic composition according to <1>, wherein the alkyldiethanolamine having an alkyl group having 1 to 3 carbon atoms is N-methyldiethanolamine.
<4> the dispersant for hydraulic composition according to any one of <1> to <3>, wherein the weight ratio of the alkyldiethanolamine having an alkyl group having 1 to 3 carbon atoms to the naphthalenesulfonic acid-formaldehyde condensate is preferably 0.02 to 1.5, more preferably 0. 03 to 1.2, more preferably 0. 03 to 0.5, more preferably 0. 03 to 0.3, more preferably 0.08 to 0.3, and even more preferably 0.15 to 0.3.
<5> the dispersant for hydraulic composition according to any one of <1> to <3>, wherein the weight ratio of the alkyldiethanolamine having an alkyl group having 1 to 3 carbon atoms to the naphthalenesulfonic acid-formaldehyde condensate is preferably 0. 02 to 1.5, more preferably 0. 03 to 1.2, and even more preferably 0.20 to 1.2.
<6> an aqueous solution of the dispersant for hydraulic composition according to any one of <1> to <5>, containing the dispersant and water, wherein a content of the alkyldiethanolamine having an alkyl group having 1 to 3 carbon atoms is 0.1 to 30% by weight and a content of the naphthalenesulfonic acid-formaldehyde condensate is 0.3 to 50% by weight of the solution.
<7> the aqueous solution according to <6>, wherein a content of the alkyldiethanolamine having an alkyl group having 1 to 3 carbon atoms is preferably 0.5 to 30% by weight, more preferably 0.8 to 25% by weight, and even more preferably 0.8 to 10% by weight of the solution.
<8> the aqueous solution according to <6> or <7>, wherein a content of the naphthalenesulfonic acid-formaldehyde condensate is preferably 3 to 45% by weight, more preferably 6 to 45% by weight, and even more preferably 7 to 40% by weight of the solution.
<9> the aqueous solution according to any one of <6> to <8>, wherein a content of water is 20 to 99.6% by weight, preferably 25 to 96.5% by weight, more preferably 30 to 93.2% by weight, even more preferably 40 to 93.2% by weight, still even more preferably 50 to 92.2% by weight, and yet still even more preferably 60 to 90% by weight of the solution.
<10> a hydraulic composition, containing an alkyldiethanolamine having an alkyl group having 1 to 3 carbon atoms, a naphthalenesulfonic acid-formaldehyde condensate, a hydraulic powder, an aggregate, and water, wherein the content of SO₃ is 0.5 to 6.0% by weight, and a weight ratio of the alkyldiethanolamine having an alkyl group having 1 to 3 carbon atoms to the naphthalenesulfonic acid-formaldehyde condensate (alkyldiethanolamine/naphthalenesulfonic acid-formaldehyde condensate) is 0.01 to 2.0.
<11> the hydraulic composition according to <10>, wherein the alkyldiethanolamine having an alkyl group having 1 to 3 carbon atoms is N-methyldiethanolamine;
<12> the hydraulic composition according to <10> or <11>, wherein a ratio of an amount of SO₃ in the hydraulic powder to the total amount of C₃A and C₄AF in the hydraulic powder is, as represented by SO₃/(total of C₃A and C₄AF) × 100, 3.5 to 46;
<13> the hydraulic composition according to any one of <10> to <12>, wherein a ratio of an amount of SO₃ in the hydraulic powder to the total amount of C₃A and C₄AF in the hydraulic powder is, as represented by SO₃/ (total of C₃A and C₄AF) × 100, preferably 6.0 to 35, and more preferably 8.0 to 32;
<14> the hydraulic composition according to any one of <10> to <13>, wherein the hydraulic powder preferably comprises SO₃ in an amount of preferably 0.5 to 6.0 % by weight, more preferably 0.8 to 4.5 % by weight and even more preferably 1.0 to 4.0 % by weight;
<15> the hydraulic composition according to any one of <10> to <14>, wherein a weight ratio of the water to the hydraulic powder, water/ hydraulic powder, is 0.20 to 0.50;
<16> the hydraulic composition according to any one of <10> to <14>, wherein a weight ratio of the water to the hydraulic powder, water/ hydraulic powder, is preferably 0.25 to 0.48, and more preferably 0.30 to 0.46;
<17> the hydraulic composition according to any one of <10> to <16>, wherein a weight ratio of the alkyldiethanolamine having an alkyl group having 1 to 3 carbon atoms to naphthalenesulfonic acid-formaldehyde condensate is preferably 0. 02 to 1.5, more preferably 0.03 to 1.5, more preferably 0.03 to 1.2, more preferably 0. 03 to 0.5, more preferably 0. 03 to 0.3, more preferably 0.08 to 0.3, and even more preferably 0.15 to 0.3;
<18> the hydraulic composition according to any one of <10> to <16>, wherein a weight ratio of the alkyldiethanolamine having an alkyl group having 1 to 3 carbon atoms to the naphthalenesulfonic acid-formaldehyde condensate is preferably 0. 02 to 1.5, more preferably 0. 03 to 1.2, and even more preferably 0.20 to 1.2;
<19> the hydraulic composition according to any one of <10> to <18>, wherein the content of SO₃ in the hydraulic powder is preferably 0.8 to 4. 5% by weight, and more preferably 1.0 to 4.0% by weight; and
<20> the hydraulic composition according to any one of <10> to <19>, wherein the total amount of components (A) and (B) is 0.001 to 10 parts by weight, preferably 0.01 to 5.0 parts by weight, more preferably 0.05 to 2.0 parts by weight, even more preferably 0.2 to 1.0 parts by weight, and still even more preferably 0.3 to 0.6 parts by weight to 100 parts by weight of hydraulic powder.

### Examples

The following Examples demonstrate the present invention. Examples are intended to illustrate the present invention, and not to limit the present invention.

### [Example 1 and Comparative Example 1]

### <Preparation Example 1: Preparation of naphthalenesulfonic acid-formaldehyde condensate>

In a reactor equipped with a stirrer, 1 mol of naphthalene was fed and heated to 120°C. 1.28 mol of 98% sulfuric acid was added there through a dropping funnel over 1 hour, while stirring. The mixture was then heated to 160°C and stirred for 3 hours to obtain a desired product, naphthalenesulfonic acid. An acid value of the product was 340 ± 10 mgKOH/g.

In a reactor equipped with a stirrer, 1 mol of naphthalenesulfonic acid and 2.2 mol of water were heated to 90°C. To this was added 37% formalin (in an amount corresponding to 0.97 mol of formaldehyde) dropwise over 4 hours. The mixture was then heated to 105°C and reacted for 10 hours. The condensation was stopped by adding 8 mol of warm water to the reaction mixture to dissolve a generated gel condensate. The mixture was neutralized by a liming and sodation method (a method including adding calcium carbonate to convert the whole excess sulfuric acid to a calcium salt and separate the salt as gypsum, and then form a sodium salt with sodium carbonate and separate side-produced calcium carbonate), and adjusted so as to have a solid content of 40% by weight to obtain an aqueous solution of a naphthalenesulfonic acid-formaldehyde condensate having a weight average molecular weight of 8,600.

In Preparation Example 1, a weight average molecular weight of the naphthalenesulfonic acid-formaldehyde condensate was determined by gel permeation chromatography (GPC) under the following conditions.

### [GPC conditions]

column: G4000SWXL + G2000SWXL (Tosoh Corporation)
eluent: 30mM CH₃COONa/CH₃CN = 6/4
flow rate: 0.7 ml/min
detection: UV 280 nm
sample amount: 0.2 mg/ml
standard substance: converted to polystyrene sulfonic acid
sodium salt (weight average molecular weight: 206, 1,800, 4,000, 8,000, 18,000, 35,000, 88,000, and 780,000), available from Nishio Kogyo Kabushiki Kaisya
detector: UV-8020 (Tosoh Corporation)
data processing: GPC-8020 multi-station 8020 (Tosoh Corporation)
GPC data collecting application Version 2.01
Copyright (C) Tosoh Corporation 1997-1999

### <Preparation and Evaluation of Mortar>

### (1) Preparation of mortar

In a mortar mixer (universal mixing stirrer, model: 5DM-03-γ, Dalton Corporation), a cement (C) and fine aggregates (S) were introduced in amounts as shown in Table 1 and mixed without water for 10 seconds. To the mixture was added mixing water (W) containing an aqueous solution of a dispersant for hydraulic composition having a constitution shown in Table 2 [an aqueous solution prepared by adding an aqueous 10% by weight solution of a component (A) to an aqueous solution of a component (B)] in such amount as achieving a target mortar flow of 210 ± 7 mm. To the mixture was also added a defoaming agent such that an air entrainment was not more than 2%. The mixture was subjected to a process of main kneading for 60 seconds at a low speed rotation (63 rpm) and then for 120 seconds at a high speed rotation (126 rpm). In preparation of an aqueous solution of a component (B) , a naphthalenesulfonic acid-formaldehyde condensate was used in a form of 40% by weight aqueous solution, and lignin sulfonic acid was used in a form of 20% by weight aqueous solution. It is noted that an amount of a dispersant in mixing water was very small and W in Table 1 represented an amount of the mixing water including the amount of a dispersant. Mortar flow retention and hardened strength are shown in Table 2.

Any aqueous solution prepared by adding an aqueous solution 10% by weight solution of a component (A) to an aqueous solution of a component (B) was a homogeneous and transparent aqueous solution having a low viscosity not causing a trouble in an operation of addition.

**[Table 1]**

| W/C | W | C | S |
|---|---|---|---|
| 0. 45 | 360g | 800g | 1400g |

- Cement (C): ordinary Portland cement (ordinary Portland cement of Taiheiyo Cement Corporation/ordinary Portland cement of Sumitomo Osaka Cement Co., Ltd = 1/1, weight ratio), density: 3.16 g/cm³, amount of SO₃: 2.67% by weight, [SO_{3/} (C₃A + C₄AF) × 100] : 15.8
- Fine aggregate (S): area: Joyo, pit sand, FM = 2.67, density: 2.56 g/cm³
- Water (W): mixing water (containing a dispersant for hydraulic composition)

A weight ratio of water to a hydraulic powder, W/C, was 0.45 (45% by weight)

Minerals such as SO₃, C₃A, and C₄AF in the cement were quantified by the following method (the same applied to other Examples and Comparative Examples) . A powder X-ray diffraction apparatus RINT-2500 (Rigaku Corporation) was used under measurement conditions of: target: CuKα, tube current: 40 mA, tube voltage: 200 kV, and scanning range: 5 to 70 deg.2θ; and scanning conditions of: scan mode: step scan, step width: 0.02°, and measurement time per step: 2 seconds. 2.7 g of sample of a hydraulic powder and 0 . 3 g of standard "α-corundum (Al₂O₃) " were mixed and subjected to the powder X-ray diffraction. Peak areas of minerals were used to quantify the minerals based on a peak area of the standard substance using a Rietveld analyzing software. The Rietveld analyzing software used was PDXL Ver.1.8 (Rigaku Corporation) . From the analysis, contents in the cement were determined as follows: 61.9% by weight for C₃S, 15.8% by weight for C₂S, 8.5% by weight for C₃A, 8.4% by weight for C₄AF, and 2.67% by weight for gypsum.

### (2) Evaluation of mortar

Mortars were evaluated for mortar flow retention and hardening strength according to the following test methods. Evaluation results are shown in Table 2.

### (2-1) Evaluation for mortar flow retention

A mortar flow was measured in accordance with JIS R 5201. In this test, the falling motion described in JIS R 5201 was not performed. The measurement was conducted with a mortar immediately after the process of main kneading and 15 minutes thereafter. A mortar flow retention was determined by (mortar flow 15 minutes after) / (mortar flow immediately after) × 100 (%) . The value closer to 100 refers to the smaller change in mortar flow from that immediately after the process of main kneading.

### (2-2) Evaluation for hardening strength

According to JIS A 1132, a mortar was put by two layers in each of five cylindrical plastic molds (diameter of a base: 5 cm, height: 10 cm) and cured in the air (20°C) in a room at 20°C, then hardened. Samples hardened for 24 hours from the preparation of the mortar were demolded from the mold. Among five samples, three were measured for 24-hour compressive strength. The other two were further aged in water for 7 days from the preparation, and measured for 7-day compressive strength. A compressive strength of a sample was measured according to JIS A 1108. Three measured values (for 24-hour compressive strength) and two measured values (for 7-day compressive strength) were used to calculate average values, respectively.

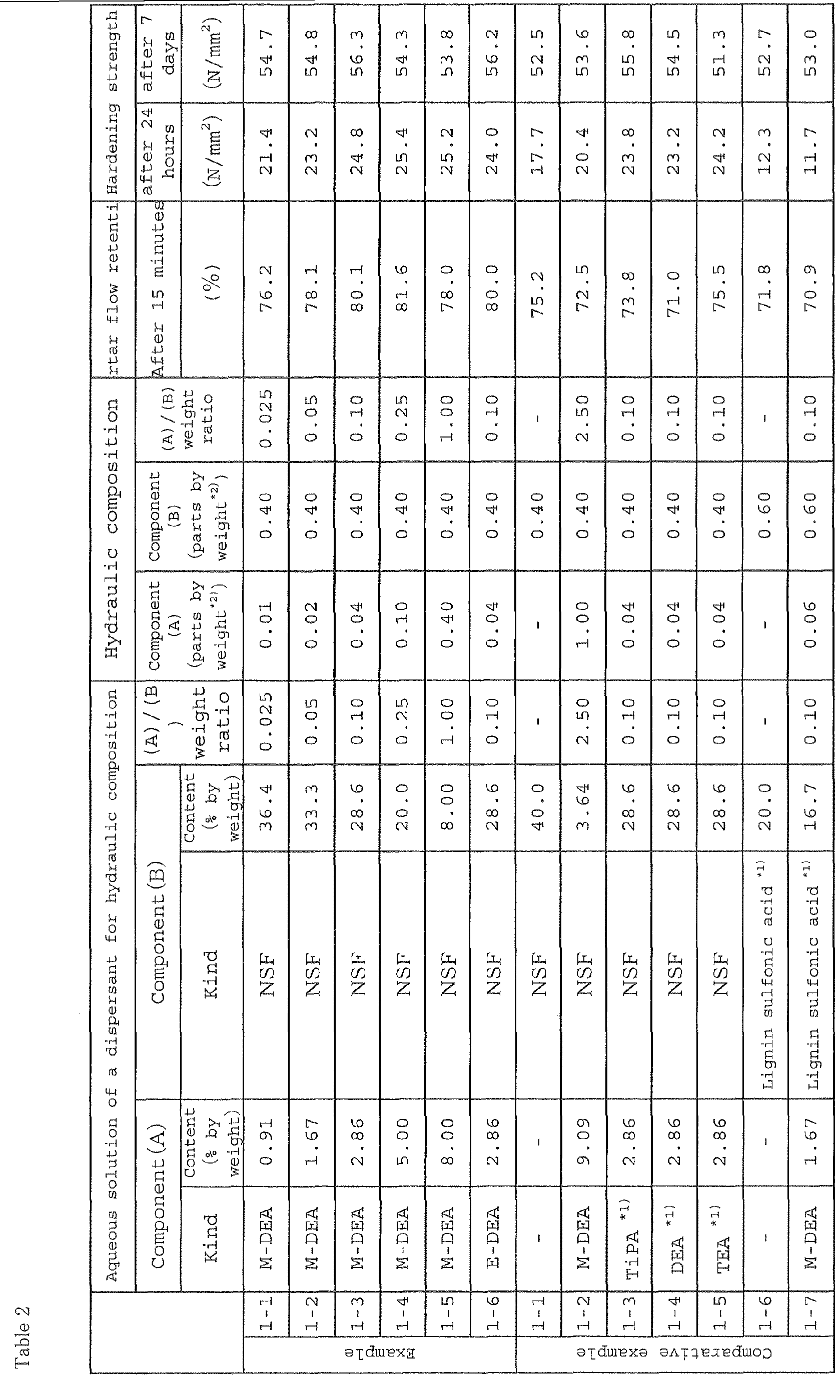

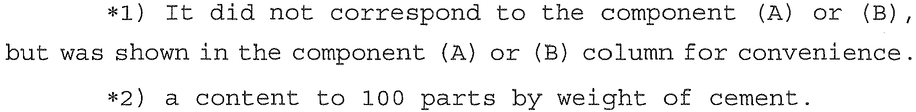

In Tables, abbreviations represent the followings:
- M-DEA: N-methyldiethanolamine (Nippon Nyukazai Co,Ltd., aminoalcohol MDA) (the same applies to the follows)
- E-DEA: N-ethyldiethanolamine (Nippon Nyukazai Co,Ltd., aminoalcohol MED)
- TiPA: triisopropanolamine (reagent grade)
- DEA: diethanolamine (reagent grade)
- TEA: triethanolamine (reagent grade)
- NSF: naphthalenesulfonic acid-formaldehyde condensate prepared in Preparation Example 1 (the same applies to the follows)
- lignin sulfonic acid: lignin sulfonic acid dispersant (Borregaard LignoTech, Ultrazine NAS)

Results showed that: Examples 1-1 to 1-6 exhibited better mortar flow retention than Comparative Example 1-1 using only a naphthalenesulfonic acid-formaldehyde condensate; Comparative Example 1-2 using components (A) and (B) at a weight ratio (A)/(B) outside the range of the present invention exhibited worse mortar flow retention than Comparative Example 1-1; and Comparative Examples 1-3, 1-4, and 1-5 using an amine compound together exhibited worse mortar flow retention or a lower 7-day hardening strength than Comparative Example 1-1. From results of Comparative Examples 1-6 and 1-7, the effect of the component (A) of the present invention were found to be very selective to a naphthalenesulfonic acid-formaldehyde condensate.

Additional evaluations were made for mortar flow retention and hardening strength in the same way as in Example 1-1, in the case that an amount of the component (B) added was 0.35 parts by weight or 0.45 parts by weight to 100 parts by weight of cement. The cement used had a lot quality shown below. A target mortar flow was, 150 ± 5 mm for a mortar prepared with the component (B) in an amount of 0.35 parts by weight, or 180 ± 5 mm for a mortar prepared with the component (B) in an amount of 0.45 parts by weight. Use of a cement C2 of a different lot is considered to cause a lower target mortar flow than that in Table 2 even though the larger amount of the component (B) was added. Results are shown in Table 3.

- Cement (C) : ordinary Portland cement (ordinary Portland cement of Taiheiyo Cement Corporation/ordinary Portland cement of Sumitomo Osaka Cement Co., Ltd = 1/1, weight ratio), density: 3.16 g/cm³, amount of SO₃: 1.39% by weight, [SO₃/ (C₃A + C₄AF) × 100] : 8.34

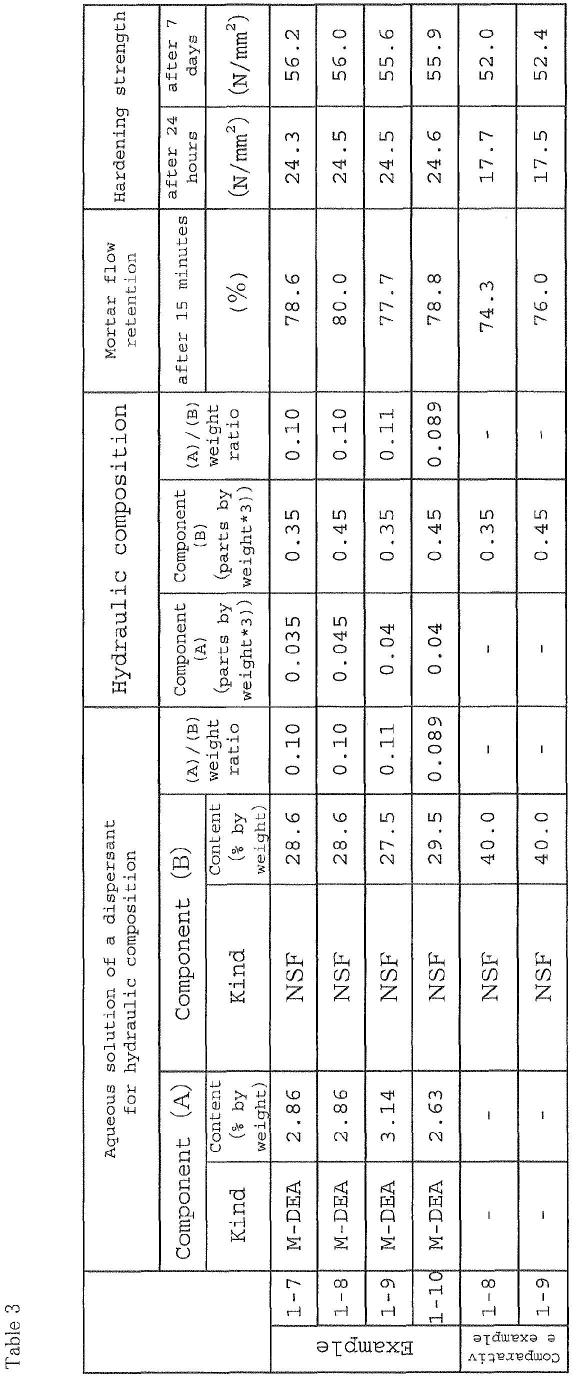

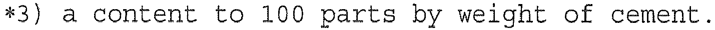

Examples 1-7 to 1-10, having a changed amount of the component (B), exhibited a better mortar flow retention than Comparative Examples 1-8 and 1-9 containing only a naphthalenesulfonic acid-formaldehyde condensate, as shown in Table 2.

### [Example 2 and Comparative Example 2]

Cements having respective aluminate phases (C₃A and C₄AF) as shown in Table 4 were mixed with gypsum dihydrate and bassanite so as to obtain cements having respective compositions having a content of SO₃ and a value represented by [SO₃/(C₃A + C₄AF)] × 100 as shown in Table 5. These cements were used to prepare mortars using a combination of components (A) and (B) or only a component (B). Mortars were measured for mortar retention after 15 minutes from the preparation in the same way as in Example 1. Results are shown in Table 5. In Table 5, also shown is a relative value of mortar retention compared to a corresponding Comparative Example (having the same sub-number) set to 100. A composition of a mortar was shown in Table 4. W and S in Table 4 were same to those in Example 1. Example 2 used an aqueous solution containing components (A) and (B) in amounts of 2.86% by weight and 28.6% by weight, respectively. Comparative Example 2 used an aqueous solution containing a component (B) in an amount of 40.0% by weight.

**[Table 4]**

| W/C | W | C | S |
|---|---|---|---|
| 0. 45 | 360g | 800g | 1400g |

| Content in C | | | |
|---|---|---|---|
| C₃A | C₄AF | | |
| 4% by weight | 9% by weight | | |

**Table 5**

| | Cement | | Hydraulic composition | | | | | Moltar flow retention | |
|---|---|---|---|---|---|---|---|---|---|
| | Amount of (% SO₃ by weight) | SO_{3/}(C₃A+C₄AF)×100 | Component (A) | | Component (B) | | (A) / (B ) weight ratio | after 15 minutes | |
| | | | Kind | parts by weight | Kind | parts by weight | | % (%) | Relative value |
| Example 2-1 | 0.85 | 6.5 | M-DEA | 0.04 | NSF | 0.40 | 0.1 | 71.2 | 102 |
| Comparative example 2-1 | 0.85 | 6.5 | - | - | NSF | 0.40 | - | 70.1 | 100 |
| Example 2-2 | 1.7 | 13.1 | M-DEA | 0.04 | NSF | 0.40 | 0.1 | 82.0 | 102 |
| Comparative example 2-2 | 1.7 | 13.1 | - | - | NSF | 0.40 | - | 80.2 | 100 |
| Example 2-3 | 2.5 | 19.2 | M-DEA | 0.04 | NSF | 0.40 | 0.1 | 79.9 | 103 |
| Comparative example 2-3 | 2.5 | 19.2 | - | - | NSF | 0.40 | - | 77.5 | 100 |
| Example 2-4 | 3.4 | 26.2 | M-DEA | 0.04 | NSF | 0.40 | 0.1 | 80.3 | 103 |
| Comparative example 2-4 | 3.4 | 26.2 | - | - | NSF | 0.40 | - | 78.0 | 100 |
| Example 2-5 | 4.0 | 30.8 | M-DEA | 0.04 | NSF | 0.40 | 0.1 | 75.7 | 102 |
| Comparative example 2-5 | 4.0 | 30. 8 | - | - | NSF | 0.40 | - | 74.4 | 100 |
| Example 2-6 | 5.0 | 38.5 | M-DEA | 0.04 | NSF | 0.40 | 0.1 | 77.2 | 100 |
| Comparative example 2-6 | 5.0 | 38.5 | - | - | NSF | 0.40 | - | 76.3 | 100 |
| Example 2-7 | 5.8 | 44.6 | M-DEA | 0.04 | NSF | 0.40 | 0.1 | 71.9 | 101 |
| Comparative example 2-7 | 5.8 | 44.6 | - | - | NSF | 0.40 | - | 71.4 | 100 |

Results in Table 5 showed that, compared to Comparative Examples 2-1 to 2-7 not using a component (A) in combination, Examples 2-1 to 2-7 using a combination of components (A) and (B) exhibited improvement in mortar flow retention after 15 minutes, and Examples 2-3 and 2-4 exhibited a remarkably much better improvement than Comparative Examples.

### [Example 3 and Comparative Example 3]

Cements having respective aluminate phases (C₃A and C₄AF) as shown in Table 6 were mixed with gypsum dihydrate and bassanite so as to obtain cements having respective compositions having a content of SO₃ and a value represented by [SO₃/ (C₃A + C₄AF)] × 100 as shown in Table 7. These cements were used to prepare mortars using a combination of components (A) and (B) or only a component (B). Mortars were measured for 24-day and 7-day hardening strengths from the preparation in the same way as in Example 1. Results are shown in Table 7. In Table 7, also shown is a relative value of a hardening strength compared to a corresponding Comparative Example (having the same sub-number) set to 100. A composition of a mortar was shown in Table 6. W and S in Table 6 were same to those in Example 1. Example 3 used an aqueous solution containing components (A) and (B) in amounts of 2.86% by weight and 28.6% by weight, respectively. Comparative Example 3 used an aqueous solution containing a component (B) in an amount of 40.0% by weight.

**[Table 6]**

| W/C | W | C | S |
|---|---|---|---|
| 0.5 | 225g | 450g | 1350g |

| Content in C | | | |
|---|---|---|---|
| C₃A | C₄AF | | |
| 4% by weight | 9% by weight | | |

**Table 7**

| | Cement | | Hydraulic composition | | | | | Hardening strength | | | |
|---|---|---|---|---|---|---|---|---|---|---|---|
| | SO₃ (% by weight) | SO₃/ (C₃A+C₄AF) ×100 | Component (A) | | Component (B) | | Weight ratio (A) / (B) | after 24 hours | | after 7 days | |
| | | | Kind | Parts by weight | Kind | Parts by weight | | N/MM² | Relativ e value | N/mm² | Relativ e value |
| Example 3-1 | 0.85 | 6.5 | M-DEA | 0.04 | NSF | 0.40 | 0.1 | 12.6 | 105 | 44.9 | 100 |
| Comparative example 3-1 | 0.85 | 6.5 | - | - | NSF | 0.40 | - | 12.0 | 100 | 44.9 | 100 |
| Example 3-2 | 1.7 | 13.1 | M-DEA | 0.04 | NSF | 0.40 | 0.1 | 15.6 | 111 | 45.2 | 103 |
| Comparative example 3-2 | 1.7 | 13.1 | - | - | NSF | 0.40 | - | 14.0 | 100 | 43.9 | 100 |
| Example 3-3 | 2.5 | 19.2 | M-DEA | 0.04 | NSF | 0.40 | 0.1 | 15.8 | 112 | 44.0 | 102 |
| Comparative example 3-3 | 2.5 | 19.2 | - | - | NSF | 0.40 | - | 14.1 | 100 | 43.2 | 100 |
| Example 3-4 | 3.4 | 26.2 | M-DEA | 0.04 | NSF | 0.40 | 0.1 | 15.3 | 110 | 42.8 | 100 |
| Comparative example 3-4 | 3.4 | 26.2 | - | - | NSF | 0.40 | - | 13.9 | 100 | 42.9 | 100 |
| Example 3-5 | 4.0 | 30.8 | M-DEA | 0.04 | NSF | 0.40 | 0.1 | 15.2 | 111 | 43.3 | 100 |
| Comparative example 3-5 | 4.0 | 30.8 | - | - | NSF | 0.40 | - | 13.8 | 100 | 43.2 | 100 |
| Example 3-6 | 5.0 | 38.5 | M-DEA | 0.04 | NSF | 0.40 | 0.1 | 14.3 | 103 | 41.5 | 100 |
| Comparative example 3-6 | 5.0 | 38.5 | - | - | NSF | 0.40 | - | 13.8 | 100 | 41.7 | 100 |
| Example 3-7 | 5.8 | 44.6 | M-DEA | 0.04 | NSF | 0.40 | 0.1 | 14.1 | 103 | 41.0 | 100 |
| Comparative example 3-7 | 5.8 | 44.6 | - | - | NSF | 0.40 | | 13.7 | 100 | 40.8 | 100 |

Results in Table 7 showed that, compared to Comparative Examples 3-1 to 3-7 not using a component (A) in combination, Examples 3-1 to 3-7 using a combination of components (A) and (B) exhibited improvement in 24-hour hardening strength. Examples 3-2 to 3-5 exhibited a remarkably much better improvement than Comparative Examples.

## Claims

1. A dispersant for a hydraulic composition, comprising an alkyldiethanolamine having an alkyl group having 1 to 3 carbon atoms and a naphthalenesulfonic acid-formaldehyde condensate, wherein a weight ratio of the alkyldiethanolamine having an alkyl group having 1 to 3 carbon atoms to the naphthalenesulfonic acid-formaldehyde condensate (alkyldiethanolamine/ naphthalenesulfonic acid-formaldehyde condensate) is 0.01 to 2.0.

2. The dispersant for a hydraulic composition according to claim 1, wherein the alkyldiethanolamine having an alkyl group having 1 to 3 carbon atoms is N-methyldiethanolamine.

3. An aqueous solution of a dispersant for a hydraulic composition, comprising the dispersant for a hydraulic composition according to claim 1 or 2 and water, wherein, in the aqueous solution, the content of the alkyldiethanolamine having an alkyl group having 1 to 3 carbon atoms is 0.1 to 30% by weight and the content of the condensate naphthalenesulfonic acid-formaldehyde is 0.3 to 50% by weight.

4. A hydraulic composition, comprising an alkyldiethanolamine having an alkyl group having 1 to 3 carbon atoms, a naphthalenesulfonic acid-formaldehyde condensate, a hydraulic powder, an aggregate and water, wherein the hydraulic powder comprises SO₃ in an amount of 0.5 to 6.0% by weight, and a weight ratio of the alkyldiethanolamine having an alkyl group having 1 to 3 carbon atoms to the naphthalenesulfonic acid-formaldehyde condensate (alkyldiethanolamine/ naphthalenesulfonic acid-formaldehyde condensate) is 0.01 to 2.0.

5. The hydraulic composition according to claim 4, wherein the alkyldiethanolamine having an alkyl group having 1 to 3 carbon atoms is N-methyldiethanolamine.

6. The hydraulic composition according to claim 4 or 5, wherein the amount of SO₃ to the total amount of C₃A and C₄A in the hydraulic powder × 100 is 3.5 to 46.

7. The hydraulic composition according to any one of claims 4 to 6, wherein a weight ratio of the water to the hydraulic powder, water/ hydraulic powder, is 0.20 to 0.50.

8. Use of an alkyldiethanolamine having an alkyl group having 1 to 3 carbon atoms and a naphthalenesulfonic acid-formaldehyde condensate for adding them to a hydraulic composition at a weight ratio of the alkyldiethanolamine having an alkyl group having 1 to 3 carbon atoms to the naphthalenesulfonic acid-formaldehyde condensate (alkyldiethanolamine/ naphthalenesulfonic acid-formaldehyde condensate) of 0.01 to 2.0 for improving flowability retention of the hydraulic composition.

9. The use for improving flowability retention according to claim 8, wherein the alkyldiethanolamine is N-methyldiethanolamine.

10. The use for improving flowability retention according to claim 8 or 9, wherein the hydraulic powder comprises SO₃ in an amount of 0.5 to 6.0% by weight.

11. The use for improving flowability retention according to any one of claims 8 to 10, wherein an amount of SO₃ to the total amount of C₃A and C₄AF in the hydraulic powder × 10 0 is 3.5 to 46.

12. A method for improving flowability retention of a hydraulic composition, comprising adding an alkyldiethanolamine having an alkyl group having 1 to 3 carbon atoms and a naphthalenesulfonic acid-formaldehyde condensate to the hydraulic composition at a weight ratio of the alkyldiethanolamine having an alkyl group having 1 to 3 carbon atoms to the naphthalenesulfonic acid-formaldehyde condensate (alkyldiethanolamine/naphthalenesulfonic acid-formaldehyde condensate) of 0.01 to 2.0.

13. The method for improving flowability retention according to claim 12, wherein the alkyldiethanolamine having an alkyl group having 1 to 3 carbon atoms is N-methyldiethanolamine.

14. The method for improving flowability retention according to claim 12 or 13, wherein the hydraulic powder comprises SO₃ in an amount of 0.5 to 6.0% by weight.

15. The method for improving flowability retention according to any one of claims 12 to 14, wherein an amount of SO₃ to the total amount of C₃A and C₄AF in the hydraulic powder × 100 is 3.5 to 46.

## Patentansprüche

1. Dispersionsmittel für eine hydraulische Zusammensetzung, enthaltend ein Alkyldiethanolamin mit einer Alkylgruppe mit 1 bis 3 Kohlenstoffatomen und ein Naphthalinsulfonsäure-Formaldehyd-Kondensat, worin ein Gewichtsverhältnis des Alkyldiethanolamins mit einer Alkylgruppe mit 1 bis 3 Kohlenstoffatomen zu dem Naphthalinsulfonsäure-Formaldehyd-Kondensat (Alkyldiethanolamin/Naphthalinsulfonsäure-Formaldehyd-Kondensat) 0,01 bis 2,0 ist.

2. Dispersionsmittel für eine hydraulische Zusammensetzung gemäß Anspruch 1, worin das Alkyldiethanolamin mit einer Alkylgruppe mit 1 bis 3 Kohlenstoffatomen N-Methyldiethanolamin ist.

3. Wässrige Lösung aus einem Dispersionsmittel für eine hydraulische Zusammensetzung, enthaltend das Dispergiermittel für eine hydraulische Zusammensetzung gemäß Anspruch 1 oder 2 und Wasser, worin in der wässrigen Lösung der Gehalt des Alkyldiethanolamins mit einer Alkylgruppe mit 1 bis 3 Kohlenstoffatomen 0,1 bis 30 Gew.% und der Gehalt des Naphthalinsulfonsäure-Formaldehyd-Kondensates 0,3 bis 50 Gew.% ist.

4. Hydraulische Zusammensetzung, enthaltend ein Alkyldiethanolamin mit einer Alkylgruppe mit 1 bis 3 Kohlenstoffatomen, ein Naphthalinsulfonsäure-Formaldehyd-Kondensat, ein hydraulisches Pulver, ein Aggregat und Wasser, worin das hydraulische Pulver SO₃ in einer Menge von 0,5 bis 6,0 Gew.% enthält und ein Gewichtsverhältnis des Alkyldiethanolamins mit einer Alkylgruppe mit 1 bis 3 Kohlenstoffatomen zu dem Naphthalinsulfonsäure-Formaldehyd-Kondensat (Alkyldiethanolamin/Naphthalinsulfonsäure-Formaldehyd-Kondensat) 0,01 bis 2,0 ist.

5. Hydraulische Zusammensetzung gemäß Anspruch 4, worin das Alkyldiethanolamin mit einer Alkylgruppe mit 1 bis 3 Kohlenstoffatomen N-Methyldiethanolamin ist.

6. Hydraulische Zusammensetzung gemäß Anspruch 4 oder 5, worin die Menge von SO₃ zu der Gesamtmenge von C₃A und C₄A in dem hydraulischen Pulver × 100 3,5 bis 46 ist.

7. Hydraulische Zusammensetzung gemäß einem der Ansprüche 4 bis 6, worin ein Gewichtsverhältnis von Wasser zu dem hydraulischen Pulver, Wasser/hydraulisches Pulver, 0,20 bis 0,50 ist.

8. Verwendung eines Alkyldiethanolamins mit einer Alkylgruppe mit 1 bis 3 Kohlenstoffatomen und eines Naphthalinsulfonsäure-Formaldehyd-Kondensates zur Zugabe dieser zu einer hydraulischen Zusammensetzung bei einem Gewichtsverhältnis des Alkyldiethanolamins mit einer Alkylgruppe mit 1 bis 3 Kohlenstoffatomen zu dem Naphthalinsulfonsäure-Formaldehyd-Kondensat (Alkyldiethanolamin/Naphthalinsulfonsäure-Formaldehyd-Kondensat) von 0,01 bis 2,0, zur Verbesserung der Fließfähigkeitsretention der hydraulischen Zusammensetzung.

9. Verwendung zur Verbesserung der Fließfähigkeitsretention gemäß Anspruch 8, worin das Alkyldiethanolamin N-Methyldiethanolamin ist.

10. Verwendung zur Verbesserung der Fließfähigkeitsretention gemäß Anspruch 8 oder 9, worin das hydraulische Pulver SO₃ in einer Menge von 0,5 bis 6,0 Gew.% enthält.

11. Verwendung zur Verbesserung der Fließfähigkeitsretention gemäß einem der Ansprüche 8 bis 10, worin eine Menge von SO₃ zu der Gesamtmenge an C₃A und C₄AF in dem hydraulischen Pulver × 100 3,5 bis 46 ist.

12. Verfahren zur Verbesserung der Fließfähigkeitsretention einer hydraulischen Zusammensetzung, enthaltend die Zugabe eines Alkyldiethanolamins mit einer Alkylgruppe mit 1 bis 3 Kohlenstoffatomen und eines Naphthalinsulfonsäure-Formaldehyd-Kondensates zu der hydraulischen Zusammensetzung bei einem Gewichtsverhältnis des Alkyldiethanolamins mit einer Alkylgruppe mit 1 bis 3 Kohlenstoffatomen zu dem Naphthalinsulfonsäure-Formaldehyd-Kondensat (Alkyldiethanolamin/Naphthalinsulfonsäure-Formaldehyd-Kondensat) von 0,01 bis 2,0.

13. Verfahren zur Verbesserung der Fließfähigkeitsretention gemäß Anspruch 12, worin das Alkyldiethanolamin mit einer Alkylgruppe mit 1 bis 3 Kohlenstoffatomen N-Methyldiethanolamin ist.

14. Verfahren zur Verbesserung der Fließfähigkeitsretention gemäß Anspruch 12 oder 13, worin das hydraulische Pulver SO₃ in einer Menge von 0,5 bis 6,0 Gew.% enthält.

15. Verfahren zur Verbesserung der Fließfähigkeitsretention gemäß einem der Ansprüche 12 bis 14, worin eine Menge von SO₃ zu der Gesamtmenge an C₃A und C₄AF in dem hydraulischen Pulver × 100 3,5 bis 46 ist.

## Revendications

1. Dispersant pour composition hydraulique, comprenant une alkyldiéthanolamine ayant un groupe alkyle contenant 1 à 3 atomes de carbone et un condensat d'acide naphtalènesulfonique-formaldéhyde, dans lequel un rapport pondéral entre l'alkyldiéthanolamine ayant un groupe alkyle contenant 1 à 3 atomes de carbone et le condensat d'acide naphtalènesulfonique-formaldéhyde (alkyldiéthanolamine/condensat d'acide naphtalènesulfonique-formaldéhyde) est de 0,01 à 2,0.

2. Dispersant pour composition hydraulique selon la revendication 1, dans lequel l'alkyldiéthanolamine ayant un groupe alkyle contenant 1 à 3 atomes de carbone est la N-méthyldiéthanolamine.

3. Solution aqueuse d'un dispersant pour composition hydraulique, comprenant le dispersant pour composition hydraulique selon la revendication 1 ou 2 et de l'eau, dans laquelle, dans la solution aqueuse, la teneur de l'alkyldiéthanolamine ayant un groupe alkyle contenant 1 à 3 atomes de carbone est de 0,1 à 30% en poids et la teneur du condensat d'acide naphtalènesulfonique-formaldéhyde est de 0,3 à 50 % en poids.

4. Composition hydraulique, comprenant une alkyldiéthanolamine ayant un groupe alkyle contenant 1 à 3 atomes de carbone, un condensat d'acide naphtalènesulfonique-formaldéhyde, une poudre hydraulique, un agrégat et de l'eau, dans laquelle la poudre hydraulique comprend du SO₃ en une quantité de 0,5 à 6,0% en poids, et un rapport pondéral entre l'alkyldiéthanolamine ayant un groupe alkyle contenant 1 à 3 atomes de carbone et le condensat d'acide naphtalènesulfonique-formaldéhyde (alkyldiéthanolamine/condensat d'acide naphtalènesulfonique-formaldéhyde) est de 0,01 à 2,0.

5. Composition hydraulique selon la revendication 4, dans laquelle l'alkyldiéthanolamine ayant un groupe alkyle contenant 1 à 3 atomes de carbone est la N-méthyldiéthanolamine.

6. Composition hydraulique selon la revendication 4 ou 5, dans laquelle la quantité de SO₃ sur la quantité totale de C₃A et C₄A dans la poudre hydraulique X 100 est de 3,5 à 46.

7. Composition hydraulique selon l'une quelconque des revendications 4 à 6, dans laquelle un rapport pondéral entre l'eau et la poudre hydraulique, eau/poudre hydraulique, est de 0,20 à 0,50.

8. Utilisation d'une alkyldiéthanolamine ayant un groupe alkyle contenant 1 à 3 atomes de carbone et d'un condensat d'acide naphtalènesulfonique-formaldéhyde pour les ajouter à une composition hydraulique à un rapport pondéral entre l'alkyldiéthanolamine ayant un groupe alkyle contenant 1 à 3 atomes de carbone et le condensat d'acide naphtalènesulfonique-formaldéhyde (alkyldiéthanolamine/condensat d'acide naphtalènesulfonique-formaldéhyde) est de 0,01 à 2,0 pour améliorer la rétention de fluidité de la composition hydraulique.

9. Utilisation pour améliorer la rétention de fluidité selon la revendication 8, dans laquelle l'alkyldiéthanolamine est la N-méthyldiéthanolamine.

10. Utilisation pour améliorer la rétention de fluidité selon la revendication 8 ou 9, dans laquelle la poudre hydraulique comprend du SO₃ en une quantité de 0,5 à 6,0 % en poids.

11. Utilisation pour améliorer la rétention de fluidité selon l'une quelconque des revendications 8 à 10, dans laquelle la quantité de SO₃ sur la quantité totale de C₃A et C₄AF dans la poudre hydraulique X 100 est de 3,5 à 46.

12. Procédé d'amélioration de la rétention de fluidité d'une composition hydraulique, comprenant l'ajout d'une alkyldiéthanolamine ayant un groupe alkyle contenant 1 à 3 atomes de carbone et d'un condensat d'acide naphtalènesulfonique-formaldéhyde à la composition hydraulique à un rapport pondéral entre l'alkyldiéthanolamine ayant un groupe alkyle contenant 1 à 3 atomes de carbone et le condensat d'acide naphtalènesulfonique-formaldéhyde (alkyldiéthanolamine/condensat d'acide naphtalènesulfonique-formaldéhyde) est de 0,01 à 2,0.

13. Procédé d'amélioration de la rétention de fluidité selon la revendication 12, dans lequel l'alkyldiéthanolamine ayant un groupe alkyle contenant 1 à 3 atomes de carbone est la N-méthyldiéthanolamine.

14. Procédé d'amélioration de la rétention de fluidité selon la revendication 12 ou 13, dans lequel la poudre hydraulique comprend du SO₃ en une quantité de 0,5 à 6,0% en poids.

15. Procédé d'amélioration de la rétention de fluidité selon l'une quelconque des revendications 12 à 14, dans lequel une quantité de SO₃ sur la quantité totale de C₃A et C₄AF dans la poudre hydraulique X 100 est de 3,5 à 46.
